**Europäisches Patentamt**

**European Patent Office**

**Office européen des brevets**

(11) Numéro de publication: **0 119 364**
A1

(12) # DEMANDE DE BREVET EUROPEEN

(21) Numéro de dépôt: **83402518.1**

(22) Date de dépôt: **22.12.83**

(51) Int. Cl.³: **B 23 P 19/02,** F 42 B 33/04

---

(30) Priorité: **22.12.82 FR 8221557**

(43) Date de publication de la demande: **26.09.84**
**Bulletin 84/39**

(84) Etats contractants désignés: **CH DE GB IT LI**

(71) Demandeur: **MANUFACTURE DE MACHINES DU HAUT-RHIN S.A. (MANURHIN), 10, rue de Soultz, F-68200 Mulhouse (FR)**

(72) Inventeur: **Rohmer, Daniel, 1 rue Principale, F-68420 Herrlisheim (FR)**
Inventeur: **Scherrer, Alain, 64 rue de l'Espérance, F-68120 Pfastatt (FR)**

(74) Mandataire: **Martin, Jean-Jacques et al, Cabinet REGIMBEAU 26, Avenue Kléber, F-75116 Paris (FR)**

---

(54) Procédé et dispositif pour la manutention de pièces, notamment de pièces de petite taille en continu.

(57) En utilisant un véhicule (68) formé d'un corps (1) à l'intérieur duquel une chemise (2) est guidée à coulissement et peut recevoir une pièce (19), on introduit cette pièce dans son logement dans un objet (40) en la maintenant fixe par rapport au corps (1) et en substituant l'objet (40) à la chemise (2) à l'intérieur de ce corps (1) jusqu'à ce que le logement englobe la pièce (19); ainsi est assuré un centrage relatif de la pièce et de son logement et, en évitant de déplacer la pièce, on évite les coincements de celle-ci dans le véhicule et on peut travailler à des cadences élevées, notamment dans le cadre d'une installation alimentée et desservie en cinématique continue.

Application par exemple à l'introduction d'amorces dans des douilles de munition.

VEHICULE POUR LA MANUTENTION DE PIECES NOTAMMENT EN CONTINU; PROCEDE ET DISPOSITIF LE METTANT EN OEUVRE POUR L'INTRODUCTION D'UNE PIECE DANS UN LOGEMENT D'UN OBJET.

La présente invention concerne la manutention de pièces et plus particulièrement la manutention en continu de pièces de petite taille auxquelles on désire conserver une orientation prédéterminée pendant la manutention, en vue de leur présentation à un poste d'usinage ou d'assemblage.

Un exemple de telles pièces est constitué par les amorces de munitions qu'il est important de présenter à un poste d'introduction dans des culots respectifs de douilles de munitions selon une orientation précise, indispensable à une introduction sans risque d'accidents.

Pour effectuer la manutention de telles pièces, on peut les placer provisoirement dans un dispositif appelé "véhicule", constitué par un bloc rigide, par exemple métallique, comportant un canal d'axe généralement rectiligne et de section généralement constante transversalement à cet axe, pour recevoir et retenir la pièce dans ce canal, suivant une orientation déterminée par rapport à l'axe de celui-ci, pendant les opérations de manutention, et restituer ensuite la pièce ayant conservé cette orientation.

On procède ainsi dans l'art antérieur notamment lorsqu'il s'agit d'alimenter un poste de travail en cinématique continue au moyen de telles pièces ; des véhicules parcourent alors en succession continue un circuit les amenant un à un à des moyens de chargement qui introduisent une pièce dans le canal de chacun d'entre eux , puis au poste de travail où cette pièce subit une opération d'usinage ou d'assemblage déterminée, puis à des moyens de transfert de la pièce hors du canal, puis en retour aux moyens de chargement.

On observe cependant que, s'il est ainsi possible de conserver une orientation déterminée à chaque pièce pendant le parcours du circuit,des moyens de chargement aux moyens de transfert de la pièce hors du canal, le véhicule est impropre à assurer le maintien de la pièce en orientation lorsqu'elle se dégage du canal.

Ainsi, si l'on se réfère à l'exemple de l'introduction d'amorces dans les culots de douilles de munitions, on peut envisager l'utilisation de tels véhicules pour pratiquer la manutention des amorces, pour leur conserver une orientation parfaitement déterminée pendant toute cette manutention, mais le passage correct de l'amorce à son logement dans la douille de la munition au poste d'amorçage n'est pas assuré, car il impose une parfaite coïncidence entre les axes respectifs du canal du véhicule renfermant provisoirement l'amorce et de l'axe du logement prévu dans la douille pour recevoir cette amorce.

Or, en raison des faibles dimensions et des proportions des amorces, la moindre imprécision dans l'alignement du canal du véhicule et du logement de la douille peut conduire, au passage du canal à ce logement, dans une zone où le guidage de l'amorce connaît de ce fait une discontinuité, à un gauchissement et à un coincement de l'amorce, avec des risques d'explosion.

Par conséquent, jusqu'à présent, on a toujours exclu l'utilisation de véhicules pour la manutention des amorces jusqu'au poste d'amorçage, ou plus généralement pour la manutention de pièces vulnérables à un gauchissement jusqu'à un poste d'introduction de ces pièces dans un logement approprié d'un objet quelconque, ce qui excluait de ce fait tout traitement de telles pièces en cinématique continue.

Par exemple, pour introduire des amorces dans leur logement du culot d'une douille de munition, on a jusqu'à présent utilisé un procédé consistant à faire défiler les douilles une à une sous une presse de transfert sous laquelle les amorces, placées par exemple dans une trémie, sont amenées une à une par un système de coulisseau ; lorsqu'une douille se présente sous la presse, le défilement des douilles est interrompu et la presse introduit une amorce, amenée entretemps par le système de coulisseau, dans le culot de la douille ainsi arrêtée ; la file de douilles avance alors d'un pas, c'est-à-dire de la distance entre deux douilles, et l'opération reprend.

Cette technique permet d'assurer un positionnement relatif précis des amorces et de leur logement à l'introduction, mais présente l'inconvénient d'une relative lenteur, en raison d'impératifs mécaniques ; intégrée à une chaîne de fabrication travaillant par ailleurs

3

en cinématique continue, elle empêche d'utiliser cette technique de la cinématique continue à la pleine mesure de ses possibilités.

Le but de la présente invention est de rendre possible l'application de la technique de la cinématique continue à de telles pièces, en proposant un véhicule qui non seulement soit apte à recevoir et maintenir une telle pièce selon une orientation prédéterminée pendant une manutention jusqu'à un poste où doit s'effectuer la restitution de cette pièce par le véhicule, mais également soit propre à permettre une telle restitution, notamment par introduction dans un logement approprié d'un objet, dans les mêmes conditions de sécurité quant à la conservation de l'orientation prédéterminée.

Dans ce but, la présente invention propose de donner au véhicule une structure telle que, dès lors qu'il occupe une position prédéterminée par rapport à un outillage équipant le poste où doit s'effectuer la restitution, il forme partie intégrante de cet outillage, de façon à coopérer avec ce dernier dans la restitution d'une pièce qu'il a amenée jusqu'à ce poste.

A cet effet, le véhicule conforme à la présente invention, du type comportant un canal présentant un axe rectiligne et une section constante transversalement à cet axe pour recevoir intérieurement une pièce en vue de sa manutention et la restituer ensuite, est caractérisé en ce qu'il comporte au moins une chemise délimitant le canal et un corps extérieur à ce canal et par rapport auquel la chemise est montée avec possibilité de translation relative parallèlement à l'axe, de façon à coopérer avec des moyens de transfert de la pièce hors du canal en étant dissociable de ces moyens.

Notamment, dans le cas d'une application à la manutention d'amorces, un tel véhicule peut avantageusement être utilisé en complément du dispositif décrit par le brevet français n° 82 00801, lequel permet d'introduire les pièces dans les véhicules à raison d'une pièce par canal d'un véhicule, le corps et la chemise de ce véhicule étant verticaux et retenus à l'encontre d'un coulissement relatif par appui vers le bas et vers le haut contre des contreparties de la machine (références 75 et 83 de ce document).

Pendant la manutention du véhicule renfermant la pièce, celle-ci peut être maintenue à l'intérieur du canal soit par friction, en raison d'un choix approprié des dimensions du canal en fonction de celles de la pièce, soit plus avantageusement par des butées assurant également le maintien de la chemise à l'intérieur du corps, la pièce étant alors montée à coulissement libre, mais avec ajustement étroit, à l'intérieur du canal du véhicule.

Avantageusement, la chemise et le corps sont délimités, transversalement par rapport à l'axe, par deux faces respectives d'extrémité perpendiculaires à cet axe, et les longueurs respectives du corps et de la chemise, mesurées entre leurs faces d'extrémité respectives, parallèlement à l'axe, sont égales de telle sorte que, lors d'une translation relative parallèlement à l'axe, la chemise et le corps puisse être amenés dans un état privilégié dans lequel leurs faces d'extrémité respectives sont coplanaires deux à deux, ce qui définit l'état du véhicule lorsqu'on introduit une pièce dans le canal et lors de la manutention.

Selon un mode de réalisation particulièrement simple du véhicule, la chemise est tubulaire et présente une face périphérique intérieure délimitant le canal et une face périphérique extérieure de section constante transversalement à l'axe, et le corps présente une face périphérique intérieure de section constante transversalement à l'axe et complémentaire de celle de cette face périphérique extérieure pour assurer par contact mutuel glissant la possibilité de translation relative du corps et de la chemise, à partir d'un état privilégié dans lequel la chemise est engagée au maximum dans le corps, et leurs faces d'extrémité respectives sont coplanaires deux à deux si l'on adopte en outre la disposition préférée ci-dessus mentionnée.

Alors, le véhicule peut être utilisé de façon particulièrement avantageuse pour introduire une pièce dans un logement d'un objet, ce logement présentant un axe déterminé et l'objet présentant dans sa zone voisine du logement une enveloppe extérieure de géneratrices parallèles à cet axe déterminé, par un procédé comportant les

0119364

5

étapes consistant à :

a) introduire et retenir la pièce dans le canal du véhicule,

b) acheminer le véhicule et la pièce jusqu'à des moyens de transfert de cette dernière hors du canal;

c) transférer la pièce hors du canal,

d) séparer le véhicule des moyens de transfert ;
selon la présente invention, ce procédé se caractérise en ce que l'on choisit un véhicule dont le corps présente une face périphérique intérieure dont la section transversalement à l'axe est complémentaire de ladite enveloppe de l'objet et, après l'étape a) et avant l'étape c), on accole le véhicule et l'objet par la chemise du véhicule dans ledit état privilégié, dans une position relative dans laquelle les axes respectifs du logement et du canal coïncident et dans laquelle le logement fait face au canal, et en ce que, au cours de l'étape c), l'on transfère la pièce du canal au logement par translation relative de la pièce et du canal suivant l'axe de celui-ci, d'une part en provoquant une translation du corps par rapport à la chemise restant quant à elle accolée à l'objet, pour envelopper celui-ci au moyen du corps en laissant celui-ci également engagé sur la chemise (opération a) et d'autre part en poussant la pièce jusque dans le logement (opération b), et en ce que l'on provoque le retour du véhicule audit état privilégié avant de le séparer de l'objet.

Le véhicule constitue alors un élément actif de la mise en oeuvre du procédé, le transfert s'accompagnant d'un guidage relatif de la pièce et de l'objet du fait de la translation relative de la chemise et du corps.

On pourra remarquer que les translations relatives imposées à la pièce et à l'objet par la mise en oeuvre du procédé selon la présente invention sont déjà connues en elles-mêmes, par exemple du fait de US-A 2 829 554 et de US-A 3 204 518 qui décrivent des dispositifs d'introduction d'une balle dans une douille ; on remarque cependant que ces dispositifs connus sont alimentés et fonctionnent au coup par coup; ils sont impropres à être alimentés en cinématique continue, et ni la pièce, alors constituée par la balle, ni l'objet, alors constitué par la douille, n'y est amené au moyen d'un véhicule parcourant par ailleurs un circuit extérieur à ces dispositifs ; a fortiori un tel véhicule ne constitue en aucune façon un élément actif de l'introduction de la balle dans la douille.

Avantageusement, la face périphérique intérieure du corps et/ou la face périphérique extérieure de la chemise présentent au moins une extrémité chanfreinée, transversalement par rapport à l'axe, ce qui permet de provoquer ladite translation relative de la chemise et du corps jusqu'à ce qu'ils soient totalement dégagés l'un de l'autre sans rencontrer de difficulté pour les ramener ensuite audit état privilégié ; en outre, la face périphérique intérieure du corps et/ou la face périphérique extérieure de la chemise peuvent avantageusement présenter une rayure hélicoïdale.

Lorsque la pièce présente une périphérie extérieure cylindrique de révolution autour d'un axe qui se confond avec l'axe du canal lorsque la pièce est engagée à l'intérieur de celui-ci, et que la position angulaire de la pièce autour de son axe à l'introduction dans le logement de l'objet est indifférente, comme c'est le cas en ce qui concerne les amorces de munitions, les faces périphériques intérieures et extérieures respectives de la chemise et du corps sont cylindriques de révolution autour de l'axe, ce qui rend possible une manutention du véhicule et un placement de celui-ci dans l'axe du logement de l'objet en vue de l'introduction de façon particulièrement simple.

Pour mettre en oeuvre ce procédé, on utilise avantageusement un dispositif comportant, sur un poste de travail, des moyens pour recevoir dans ladite position relative un objet et un véhicule selon l'invention dans ledit état privilégié et dans le canal duquel une pièce est retenue, et des moyens pour effectuer le transfert de la pièce du canal au logement par translation de la pièce dans le canal suivant l'axe de celui-ci, ce dispositif étant caractérisé en outre en ce que les moyens pour effectuer le transfert comportent des moyens pour appliquer des poussées antagonistes suivant l'axe du canal d'une part à l'objet et à la chemise et d'autre part au corps et à la pièce, dans le sens d'une introduction de l'objet dans le corps et de la pièce dans le logement de l'objet à partir dudit état privilégié, et pour ramener ensuite le véhicule audit état privilégié.

La chemise et le corps du véhicule forment alors partie intégrante de l'outillage du poste de travail, avec lequel ils coopèrent dans l'introductionde la pièce dans le logement de l'objet.

0119364

8

Avantageusement, ce dispositif pratique les opérations a et b précitées en retenant le corps du véhicule et la pièce à l'encontre d'un mouvement notamment suivant l'axe du canal, et en chassant la chemise par rapport au corps et à la pièce suivant cet axe, par une poussée appliquée par l'intermédiaire de l'objet que l'on introduit dans le corps ainsi retenu, par une translation relative suivant cet axe, jusqu'à ce que le logement reçoive la pièce.

Grâce à l'enveloppement, par le corps du véhicule, de la zone de l'objet voisine du logement destiné à recevoir la pièce lors de l'introduction de celle-ci dans ce logement, on assure un centrage relatif aussi bon que possible du logement et du canal du véhicule, pour pratiquer l'introduction de la pièce dans son logement dans les meilleures conditions possibles ; notamment selon un mode de mise en oeuvre préféré du procédé selon lequel, après avoir introduit la pièce dans le canal du véhicule, on la retient dans ce canal à proximité de l'une des extrémités de celui-ci pour accoler la chemise et l'objet à proximité de l'autre extrémité du canal en vue de pratiquer le transfert de la pièce au logement de l'objet, on peut ainsi provoquer successivement le centrage du logement de l'objet par rapport au canal du véhicule, c'est-à-dire par rapport à la pièce, puis l'introduction de la pièce dans le logement même si l'on pratique simultanément les opérations a et b, notamment si l'on utilise un véhicule dont la chemise et le corps présentent une longueur identique, mesurée parallèlement à l'axe du canal entre leurs faces d'extrémités respectives.

Il s'ensuit une mise en oeuvre particulièrement simple du procédé, et un processus rapide d'introduction de la pièce dans son logement, ce qui permet d'intégrer sans inconvénients cette introduction, pratiquée selon l'invention, à une chaîne de fabrication également alimentée et desservie par ailleurs en cinématique continue.

D'autres caractéristiques et avantages de l'invention ressortiront de la description ci-dessous, relative à un mode de mise en oeuvre non limitatif, ainsi que des dessins annexés qui font partie intégrante de cette description.

L'invention sera décrite en référence à la manutention des amorces de munitions et à leur introduction dans des logements complémentaires prévus dans le culot de douille de munition, mais la mise en oeuvre de l'invention n'est pas limitée à un tel domaine, et l'Homme du métier pourra apporter aux dispositions qui vont être décrites et qui sont illustrées toutes les modifications liées à une adaptation à d'autres domaines techniques sans pour autant sortir du cadre de l'invention.

La figure 1 montre une vue en coupe par un plan axial du corps d'un véhicule selon l'invention.

La figure 2 montre une vue en coupe axiale, à la même échelle, de la chemise de ce véhicule.

La figure 3 montre une vue partielle, de dessus, d'une machine d'amorçage mettant en oeuvre l'invention dans le cadre d'une chaîne de fabrication alimentée et desservie en cinématique continue.

La figure 4 matérialise, sur une vue analogue, les chemins de circulation respectifs des douilles et des véhicules.

Les figures 5 à 10 montrent des vues en coupe respectivement suivant les lignes V-V, VI-VI, VII-VII, VIII-VIII, IX-IX, X-X, de la figure 3.

La figure 11 montre une vue à plus grande échelle d'un poste d'amorçage, en coupe par le plan XI-XI de la figure 12.

La figure 12 montre une vue en coupe par le plan XII-XII de la figure 11, et illustre un poste d'amorçage immédiatement avant le commencement du processus d'amorçage.

La figure 13 montre, en une vue analogue à celle de la figure 12, un poste d'amorçage en fin de processus d'amorçage.

La figure 14 montre, en une coupe axiale du barillet du dispositif d'amorçage, le chemin de came provoquant le déroulement de ce processus lors de la rotation du barillet sur lui-même autour de son axe.

La figure 15 montre le développement de ce chemin de came, et illustre les différents états d'un poste d'amorçage au fur et à mesure de la rotation du barillet et du parcours de ce chemin de came.

10

Les figures 16 et 17 montrent des vues en coupe axiale, à des échelles différentes, d'une amorce et de la douille correspondante.

Les figures 18 et 19 montrent des vues en coupe axiale, à des échelles différentes, d'une autre amorce et de la douille correspondante.

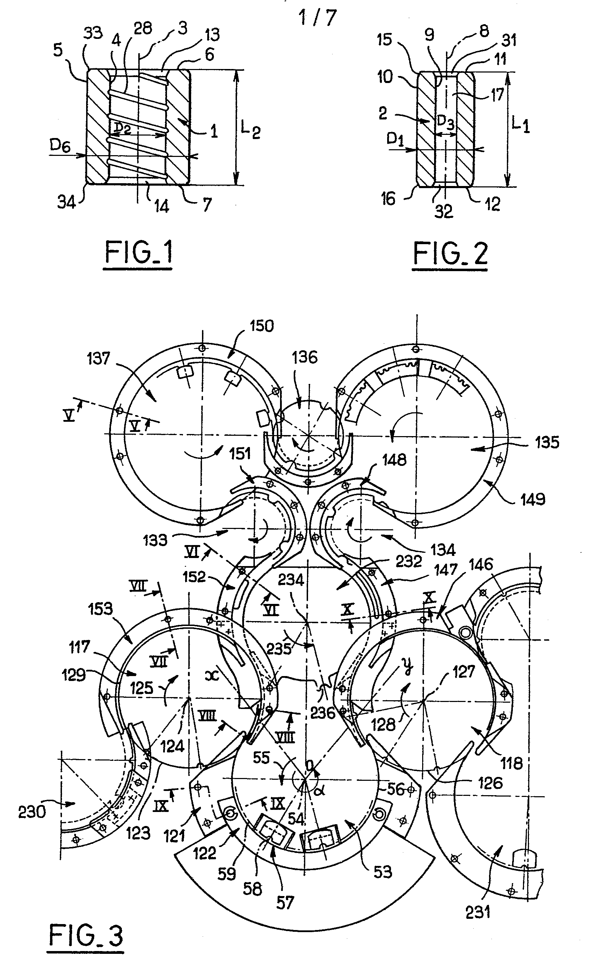

Si l'on se réfère aux figures 1 et 2, on voit que le véhicule illustré est formé d'un corps 1 et d'une chemise 2 tous deux tubulaires, indépendants et séparables.

Le corps 1 est délimité par deux faces cylindriques de révolution autour d'un même axe 3, à raison d'une face périphérique intérieure 4 et d'une face périphérique extérieure 5, reliées par deux faces annulaires d'extrémité 6,7 , planes, orientées perpendiculairement à l'axe 3 et chanfreinées respectivement en 33, 34 à leur jonction avec la face 5; de même, la chemise 2 est délimitée par deux faces cylindriques de révolution autour d'un même axe 8, à raison d'une face périphérique intérieure 9 et d'une face périphérique extérieure 10, reliées par deux faces annulaires d'extrémité 11, 12 , planes, et orientées perpendiculairement à l'axe 8.

La face périphérique extérieure 10 de la chemise 2 et la face périphérique intérieure 4 du corps 1 sont soigneusement polies et présentent des diamètres respectifs $D_1$ et $D_2$ sensiblement égaux, de telle sorte que la chemise 2 puisse être engagée dans le corps 1 dans une position dans laquelle leurs axes respectifs 8 et 3 coïncident, et que les faces 10 et 4 alors placées en contact assurent un guidage au coulissement relatif, par contact mutuel glissant, parallèlement aux axes 8 et 3 alors confondus.

Pour faciliter ces mouvements, et notamment l'introduction de la chemise 2 à l'intérieur du corps 1, la face périphérique intérieure 4 du corps 1 est reliée aux faces 6 et 7 de celui-ci par des chanfreins, respectivement 13 et 14, et la face périphérique extérieure 10 de la chemise 2 est reliée aux faces 11 et 12 de celle-ci par deux autres chanfreins, respectivement 15 et 16, tous ces chanfreins ou certains d'entre eux pouvant être omis dans d'autres modes de réalisation du véhicule.

11

En outre, la face périphérique intérieure 4 du corps 1 est munie d'une rayure hélicoïdale 28 d'axe 3 ; la face périphérique extérieure 10 de la chemise 2 pourrait également être munie d'une rayure hélicoïdale d'axe 8, la rayure 28 étant alors de préférence omise.

Selon le mode de réalisation préféré du véhicule qui est illustré, les faces 11 et 12 de la chemise 2 sont distantes, parallèlement à l'axe 8, d'une longueur $L_1$ égale à la longueur $L_2$ du corps 1, mesurée parallèlement à l'axe 3 entre ses faces 6 et 7 si bien que, par translation relative parallèlement à leurs axes 8 et 3 confondus, la chemise 2 et le corps 1 peuvent être amenés notamment dans un état privilégié dans lequel la chemise 2 est engagée au maximum dans le corps 1, et les faces 11 et 12 sont coplanaires respectivement avec les faces 6 et 7.

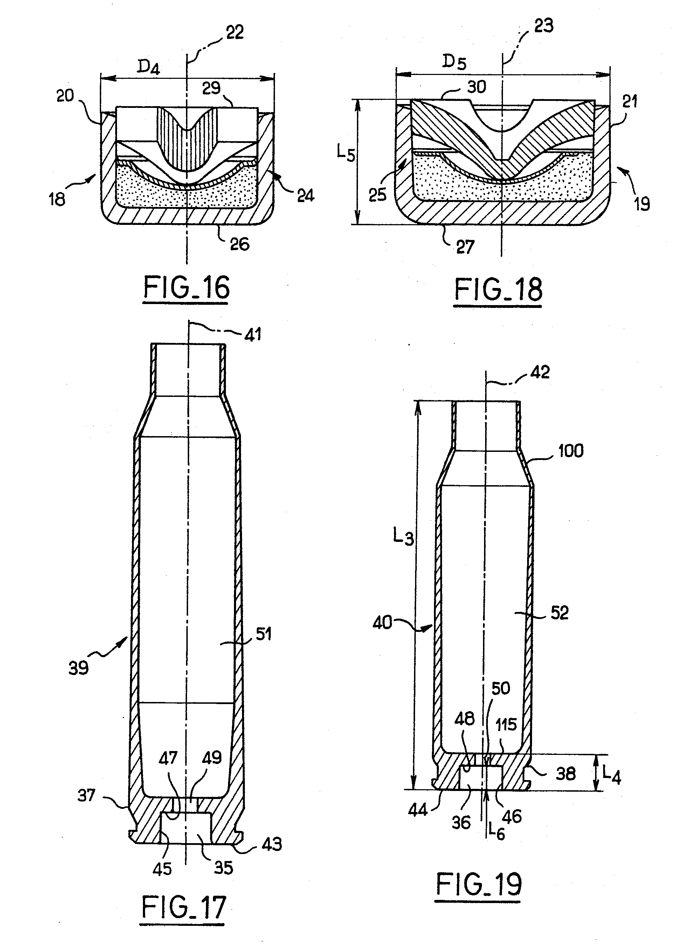

Par sa face périphérique intérieure 9, la chemise 2 définit un canal 17 d'axe 8, apte à recevoir une amorce par exemple du type illustré à la figure 16 ou du type illustré à la figure 18.

De façon connue en soi, ces amorces, respectivement 18 et 19, sont délimitées extérieurement par une face périphérique extérieure, respectivement 20 ou 21, cylindrique de révolution autour d'un axe, respectivement 22 ou 23, d'un godet, respectivement 24 ou 25, par une face de fond, respectivement 26 ou 27, de ce godet, plane et orientée perpendiculairement à l'axe respectif 22 ou 23, et par une autre face d'orientation moyenne transversale par rapport à l'axe respectif, respectivement 29 ou 30, correspondant à une face ouverte du godet, fermée partiellement par un élément rapporté ; naturellement, le véhicule pourrait être utilisé pour la manutention d'amorces d'autres types, présentant par exemple une face de fond bombée.

Pour recevoir l'amorce telle que 18 ou 19 dans une coaxialité aussi bonne que possible, le canal 17 présente un diamètre $D_3$, défini par le diamètre de la face périphérique intérieure 9 de la chemise 2, aussi voisin que possible du diamètre $D_4$ ou $D_5$ de la face périphérique extérieure 20 ou 21 de l'amorce 18 ou 19 ; le diamètre $D_3$ peut être choisi, en fonction du diamètre $D_4$ ou $D_5$, de façon à assurer une immobilisation de l'amorce 18 ou 19 à l'intérieur de la chemise 2 par friction de la face 20 ou 21 contre la face 9 mais, de préférence, la face 9 est soigneusement polie, et présente un diamètre $D_3$ supérieur de quelques centièmes de millimètres au diamètre $D_4$ ou $D_5$ de telle sorte que l'amorce 18 ou 19 soit libre au coulissement parallèlement à l'axe 8, avec lequel son axe 22 ou 23 est confondu, par rapport à la chemise 2, à l'intérieur du canal 17 de celle-ci.

Pour faciliter l'introduction de l'amorce 18 ou 19 dans le canal 17, la face périphérique intérieure 9 de la chemise 2 est avantageusement reliée à l'une au moins des faces d'extrémité 11 et 12 de celle-ci par un chanfrein, ici prévu aux deux extrémités où il est désigné respectivement par la référence 31 et par la référence 32.

On notera qu'il est ainsi nécessaire de prévoir une chemise 2 présentant un diamètre interieur $D_3$ déterminé pour chaque type d'amorce à véhiculer; les diamètres $D_1$ et $D_2$ sont quant à eux conditionnés par la douille à amorces, comme il apparaîtra plus loin ; toutefois, le diamètre $D_6$ de la face périphérique extérieure 5 du corps 1 peut être identique quels que soient les diamètres $D_3$ et $D_1$-$D_2$, ce qui permet d'utiliser des moyens standardisés pour acheminer les véhicules, formés d'un corps 1 et d'une chemise 2, lors de l'introduction d'amorces de cotes différentes dans des douilles présentant elles-mêmes des cotes différentes.

Le véhicule qui vient d'être décrit est plus particulièrement adapté, par la forme cylindrique de révolution des faces périphériques intérieures et extérieures respectives du corps 1 et de la chemise 2, à la manutention de pièces qui, comme les amorces 18 ou 19, ne doivent pas nécessairement présenter d'orientation angulaire déterminée en référence à leur axe 22 ou 23, c'est-à-dire par rapport à l'axe 8 définissant l'axe du canal 17 ; on ne sortirait pas du cadre de l'invention en prévoyant que les faces périphériques intérieures et extérieures respectives du corps 1 et de la chemise 2 présentent des sections transversales par rapport à leur axe respectif 3 ou 8 qui ne soient pas de révolution autour de cet axe, afin d'associer à chaque pièce une orientation angulaire déterminée, en référence aux axes 8 et 3 confondus, non seulement vis-à-vis de la face périphérique intérieure 9 de la chemise 2 délimitant le canal 17, mais également vis-à-vis de la face périphérique extérieure 5 du corps 1, pour permettre une manutention de l'ensemble du véhicule et de la pièce contenue dans son canal 17 en préservant une orientation connue de la pièce ; des possibilités de translation relative du corps 1 et de la chemise 2 par rapport à l'axe du canal 17 seraient naturellement préservées, par exemple grâce à une section constante, transversalement par rapport à leur axe respectif 3, 8, de la face périphérique intérieure 4 du corps 1 et de la face périphérique extérieure 10 de la chemise 2, la face 9 définissant le canal 17 présentant également une section constante transversalement par rapport à l'axe 8 pour autoriser le coulissement de la pièce.

Le choix des matériaux constitutifs respectivement du corps 1 et de la chemise 2 est du domaine des aptitudes normales de l'Homme du Métier ; à titre d'exemple non limitatif, on a obtenu de bons résultats en choisissant pour le corps un acier trempé (100C6 pour roulement) pour lui communiquer une bonne résistance mécanique et un frottement correct, et pour la chemise une fonte à graphite sphéroïdal (GS 600) compatible avec le matériau du corps pour le frottement.

Un procédé d'introduction d'une amorce 18 ou 19 dans un logement 35 ou 36 du culot 37 ou 38 d'une douille 39 ou 40 (figures 17 et 19) au moyen d'un véhicule 68 résultant de l'association d'un corps 1 et d'une chemise 2 du type tubulaire, de révolution, illustré, dont les longueurs respectives L2 et L1 sont égales, va à présent être décrit dans sa mise en oeuvre au moyen d'un dispositif plus particulièrement illustré aux figures 3 à 15.

En référence aux figures 17 et 19 qui montrent deux exemples non limitatifs de douilles susceptibles d'être ainsi amorcé, il est rappelé que le logement 35 ou 36 aménagé dans le culot 37 ou 38 d'une douille 39 ou 40 présentant un axe 41 ou 42 débouche dans une face annulaire plane 43 ou 44 de ce culot, orientée perpendiculairement à l'axe 41 ou 42 sur lequel elle est centrée ; il est délimité à l'intérieur du culot 37 ou 38 par une face périphérique intérieure 45 ou 46, cylindrique de révolution autour de l'axe 41 ou 42 avec un diamètre inférieur de quelques centièmes de millimètres au diamètre $D_4$ ou $D_5$ de la face périphérique extérieure 20 ou 21 de l'amorce 18 ou 19, pour recevoir celle-ci et l'immobiliser par friction dans une position où son axe 22 ou 23 coïncide avec l'axe 41 ou 42 de la douille, et par une face de fond 47 ou 48 plane, orientée transversalement par rapport à l'axe 41 ou 42, suivant lequel débouche dans cette face, conformément aux exemples non limitatifs illustrés, un évent 49 ou 50 plaçant le logement 35 ou 36 en communication avec le volume 51 ou 52 prévu à l'intérieur de la douille pour recevoir une charge de poudre ; les dimensions de la face périphérique 45 ou 46 du logement 35 ou 36 parallèlement à l'axe 41 ou 42 de la douille sont, en comparaison avec les dimensions de l'amorce 18 ou 19 parallèlement à son axe 22 ou 23, telles que cette amorce puisse être introduite dans son logement 35 ou 36, sa face 29 ou 30 étant tournée vers la face 47 ou 48, jusqu'à ce que la face de fond 26 ou 27 affleure la face 43 ou 44 du culot 37 ou 38 de la douille en étant de préférence placée en retrait par rapport à cette face 43 ou 44 d'une distance $\varepsilon$ généralement mais non exclusivement de l'ordre du dixième de millimètre, ce qui constitue l'état des douilles à leur sortie du dispositif qui va être décrit.

De préférence, le dispositif est alimenté et desservi en cinématique continue, comme dans l'exemple illustré où il est intégré à une chaîne de fabrication en continu.

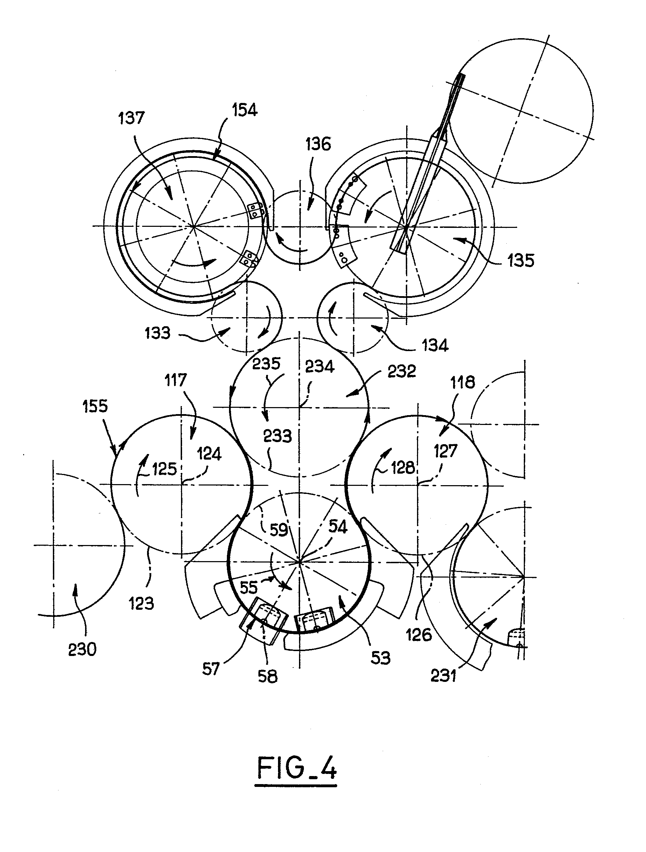

Si l'on se réfère aux figures 3 et 4, qui illustrent une partie de cette chaîne, on voit en 53 un barillet d'amorçage présentant un axe vertical 54 autour duquel il est entraîné à la rotation dans un sens déterminé 55 par tout moyen approprié du domaine des connaissances de l'Homme du métier, ce barillet 53 présentant une périphérie extérieure 56 le long de laquelle sont disposés des postes d'amorçage 57 dont chacun présente un axe propre 58, parallèle à l'axe 54, les différents axes 58 étant uniformément répartis angulairement si l'on se réfère à l'axe 54 et placés à une même distance de celui-ci, de façon à décrire, lors de la rotation du barillet 53 dans le sens 55 autour de l'axe 54, un cylindre primitif 59 de révolution autour de l'axe 54.

15

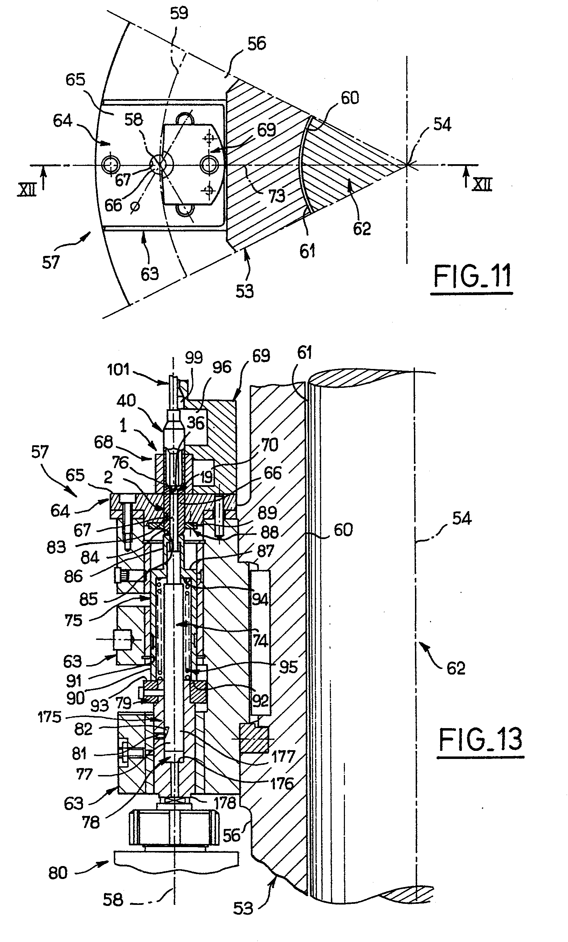

Le détail d'un poste d'amorçage 57 est plus particulièrement visible aux figures 11 à 13, où l'on a utilisé les mêmes références pour désigner les mêmes éléments, bien que ceux-ci soient placés dans des dispositions relatives différentes correspondant à des étapes différentes de l'amorçage.

On voit sur ces figures que le barillet 53 se présente sous la forme d'un manchon présentant, outre sa périphérie extérieure 56 de forme générale de révolution autour de l'axe 54, une périphérie intérieure 60 également de révolution autour de cet axe, et par laquelle il est monté sur la périphérie extérieure 61, également de révolution autour de l'axe 54, d'un arbre central 62 fixe par rapport au sol ; le montage de la périphérie intérieure 60 du barillet 53 sur la périphérie extérieure 61 de l'arbre 62 est assuré par tout moyen du domaine des connaissances de l'Homme du métier, assurant une possibilité de rotation relative autour de l'axe 54, ainsi qu'un support du barillet 53 à l'encontre d'une translation notamment vers le bas, parallèlement à l'axe 54, par rapport à l'arbre 62.

A chacun des postes d'amorçage 57, tous identiques, la périphérie extérieure 56 du barillet 53 porte de façon solidaire un bloc support 63 en saillie dans le sens d'un éloignement par rapport à l'axe 54, lequel bloc 63 porte lui-même de façon solidaire, à sa partie supérieure, une platine 64 présentant une face supérieure 65 plane, perpendiculaire à l'axe 54, c'est-à-dire horizontale.

Cette platine 64 est percée de part en part d'un trou 66 délimité par une face 67 cylindrique de révolution autour d'un axe parallèle à l'axe 54 et définissant l'axe 58 du poste d'amorçage 57, avec un diamètre inférieur au diamètre $D_6$ de la face périphérique extérieure 5 du corps 1 d'un véhicule et au moins égal au diamètre $D_2$ de la face périphérique intérieure 4 de ce corps 1, de telle sorte qu'un véhicule, désigné par la référence d'ensemble 68, puisse être posé sur la face supérieure 65 de la platine 64 dans une position telle que les axes confondus 3 et 8 coïncident avec l'axe 58, et que la face 65 serve d'appui à l'une des faces annulaires d'extrémité, par exemple 7, du corps 1 sans entraver une possibilité de coulissement de la chemise 2 à l'intérieur de celui-ci, vers le bas suivant l'axe 58.

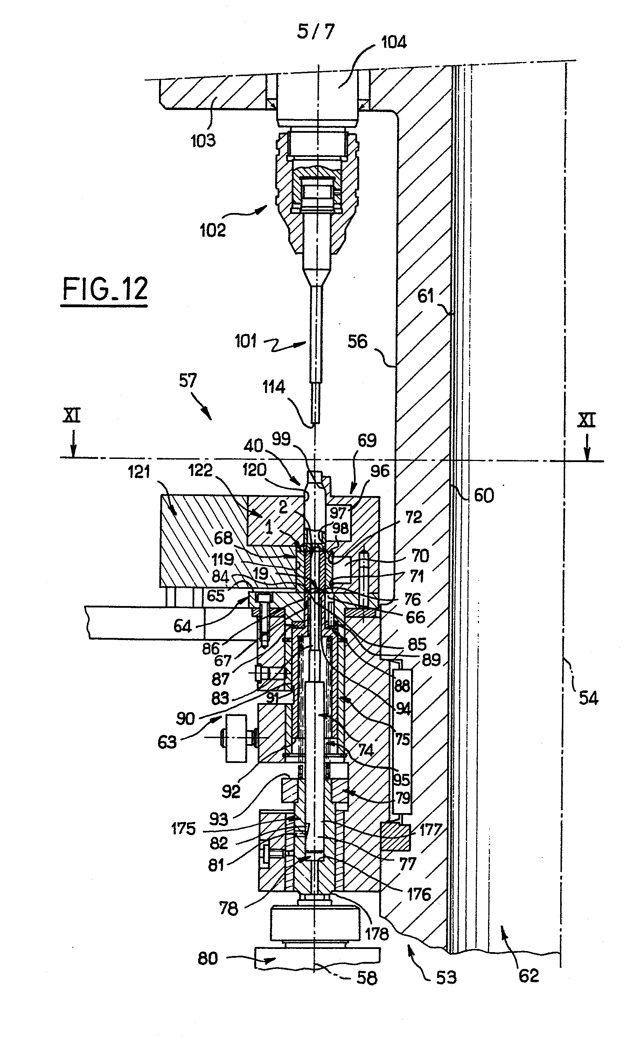

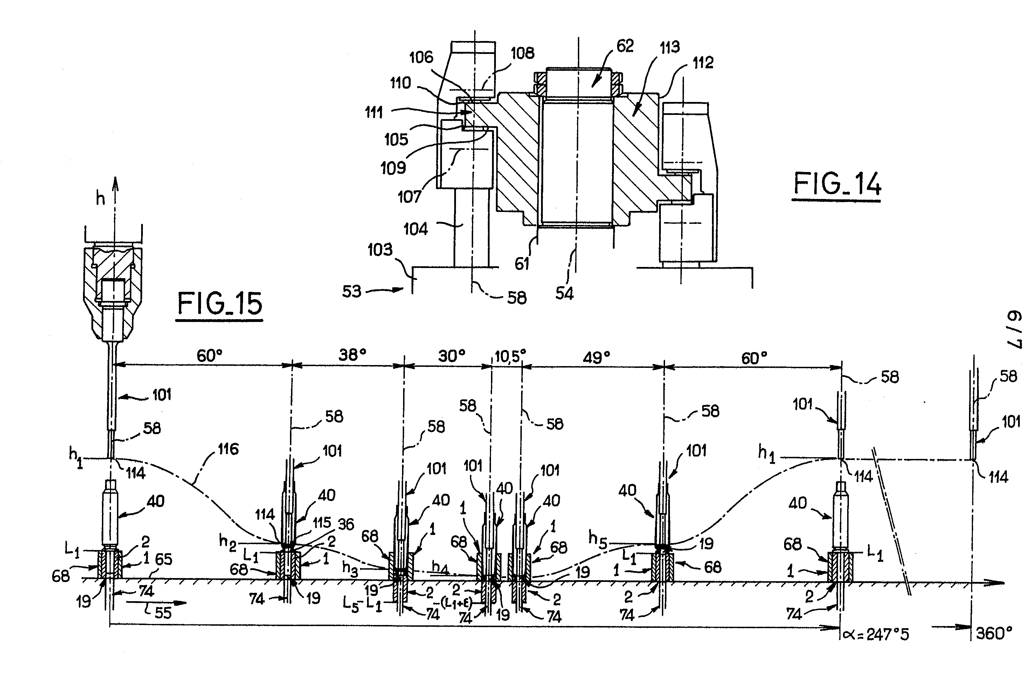

Pour définir une telle position d'un véhicule 68 sur la platine 64, le bloc support 63 porte également, de façon solidaire, au-dessus de la face 65 de cette platine 64, un bloc de positionnement 69 intégralement situé entre le cylindre primitif 59 et l'axe 54 et présentant immédiatement au-dessus de la face 65 un alvéole 70 ouvert dans le sens d'un éloignement par rapport à l'axe 54 ; cet alvéole 70 présente, entre la face 65 et un niveau horizontal situé au-dessus de celle-ci, à une distance de celle-ci égale à la hauteur du corps 1, mesurée suivant l'axe 58, c'est-à-dire à la longueur L2, au moins une surface d'appui pour la face périphérique extérieure 5 du corps 1 ; dans l'exemple illustré, il est ainsi prévu deux surfaces d'appui 71 et 72 par rapport auxquelles le reste de l'alvéole 70 est placé en retrait vers l'axe 54 ; ces surfaces d'appui 71 et 72 sont placées respectivement à proximité immédiate de la face supérieure 65 de la platine 64, qui définit pour l'alvéole 70 une face inférieure, et à proximité immédiate du niveau précité, pour servir d'appui à la face périphérique extérieure 5 du corps 1 respectivement à sa partie inférieure et à sa partie supérieure, et présentent la forme d'une partie de cylindre de révolution autour de l'axe 58 avec un diamètre égal au diamètre $D_6$, et un développement angulaire, en référence à l'axe 58, inférieur à 180° mais de préférence aussi proche que possible de cette valeur et réparti de préférence symétriquement de part et d'autre d'un plan moyen 73 incluant les axes 54 et 58 (plan des figures 12 et 13, repéré en XII-XII à la figure 11).

Pour fournir un appui vers le bas également à la chemise 2 du véhicule 68 et à une amorce, par exemple 19, placée dans le canal 17 de cette chemise dans une position dans laquelle son axe 23 coïncide avec les axes 8, 3, 58 alors confondus, le bloc support 63 porte, pour l'essentiel en dessous de la platine 64, un poinçon inférieur 74 et un coulisseau 75 l'un et l'autre de révolution autour de l'axe 58, et pénétrant dans une disposition coaxiale à l'intérieur du trou 66 de la platine 64.

Le poinçon inférieur 74 est destiné à rester fixe par rapport au bloc support 3, c'est-à-dire par rapport au barillet 53, dans une position dans laquelle il présente une face supérieure 76 en forme de disque plan transversal par rapport à l'axe 58, avec un diamètre au

0119364

17

plus égal au diamètre $D_3$ de la face périphérique intérieure 9 de la chemise 2, en coplanéarité avec la face 65 de façon à retenir l'amorce 19, par la face de fond 27 de celle-ci en contact avec cette face 76, dans une telle coplanéarité pendant la totalité de la durée du processus d'amorçage.

Toutefois, pour des raisons de sécurité, le poinçon 74 est escamotable élastiquement vers le bas par rapport à cette position privilégiée ; à cet effet, il est logé à sa partie inférieure dans un support coulisseau 175 monté coulissant suivant l'axe 58 dans le bloc support 63 et son extrémité inférieure 77 est en appui sur un grain 78 qui repose sur le fond 176 d'un logement interne 177 du support coulisseau 175, dont l'extrémité inférieure 178 repose sur un coussin hydraulique 80 de type connu en soi porté par le barillet 53 ; avantageusement le poinçon 74 est rendu solidaire du support coulisseau 175 par tout moyen approprié, et par exemple, comme il est illustré par une vis de pression 81 solidaire du coulisseau 175 et pénétrant dans le logement 177 perpendiculairement à l'axe 58 pour s'engager dans une rainure 82 que le poinçon 74 présente parallèlement à l'axe 58 à proximité de son extrémité inférieure 77 et qui présente avantageusement, en vue de l'appui de la vis de pression 81, un fond oblique par rapport à l'axe 58, ascendant dans le sens d'un rapprochement par rapport à celui-ci ; ce système pourrait être remplacé par tout autre système autorisant un escamotage du poinçon 74 vers le bas par rapport à sa position privilégiée dans laquelle sa face supérieure 76 est coplanaire avec la face 65 de la platine 64, et propre à ramener élastiquement le poinçon 74 à cette position privilégiée.

Dans sa zone la plus proche de son extrémité supérieure définie par sa face 76, et sur une hauteur au moins égale à $L1+\mathcal{E}$ mesurée à partir de cette face supérieure 76, le poinçon 74 est délimité par une face périphérique extérieure 83 cylindrique de révolution autour de l'axe 58 avec un diamètre au plus égal au diamètre $D_3$ de la face périphérique intérieure 9 de la chemise 2.

Notamment autour de cette face périphérique 83, le poinçon 74 est entouré par le coulisseau 75, monté à coulissement suivant l'axe 58 aussi bien par rapport au poinçon 74 que par rapport au bloc

0119364

support 63 avec une course au moins égale à Ll+ξ , à partir d'une position supérieure dans laquelle il présente en coplanéarité avec la face 65 une face supérieure d'extrémité 84 annulaire, plane, de révolution autour de l'axe 58 auquel elle est perpendiculaire, cette face 84 présentant un diamètre intérieur au moins égal au diamètre de la face périphérique extérieure 83 du poinçon 74 et un diamètre extérieur au plus égal au diamètre de la face périphérique 67 du trou 66.

. La périphérie intérieure de la face annulaire supérieure 84 du coulisseau 75 est définie par l'intersection de cette face avec une face périphérique intérieure 85 de celui-ci, de révolution autour de l'axe 58 avec une forme compatible avec celle du poinçon 74, également de révolution autour de l'axe 58, pour autoriser un tel escamotage du coulisseau 75 vers le bas; la périphérie extérieure de la face 84 est quant à elle définie par sa jonction avec une face périphérique extérieure 86 du coulisseau 75, cylindrique de révolution autour de l'axe 58 avec un diamètre au plus égal à celui de la face périphérique 67 du trou 66 sur une hauteur, mesurée parallèlement à l'axe 58, au moins égale à l'épaisseur de la platine 64 mesurée de façon analogue à la périphérie du trou 66.

De préférence, le diamètre intérieur de la face 84 et le diamètre extérieur de la face 83, ou diamètre de la face supérieure 76 du poinçon, sont aussi voisins que possible du diamètre $D_3$ de la face périphérique intérieure 9 de la chemise 2 ou du diamètre $D_5$ de l'amorce 19, et le diamètre de la face 86 du coulisseau ou le diamètre extérieur de la face annulaire 84 comme le diamètre de la face 67 du trou 66 sont aussi voisins que possible du diamètre $D_1$ ou du diamètre $D_2$ , pourvu que le diamètre des faces 76 et 83 reste au plus égal au diamètre $D_3$ et le diamètre de la face 67 au moins égal au diamètre $D_1$ , de façon à permettre un escamotage de la chemise 2 vers le bas, par rapport au corps 1 retenu par la face supérieure 65 de la platine 64 et par rapport à l'amorce 19 retenue par la face supérieure 76 du poinçon 74, moyennant l'escamotage du coulisseau 75 vers le bas comme il sera décrit plus loin.

En pratique, la hauteur de la face 86 est supérieure à la

19

hauteur de la platine 64, et se mesure entre la face 84 et une face annulaire 87 plane, tournée vers le haut, de révolution autour de l'axe 58, que le coulisseau 75 présente en saillie dans le sens d'un éloignement par rapport à l'axe 58 par rapport à la face périphérique extérieure 86 ; la position supérieure du coulisseau 75, correspondant à la coplanéarité des faces 84 et 65, est définie par la venue de cette face 87 en butée contre la face inférieure 89 de la platine 64, autour du trou 66, par l'intermédiaire d'une cale d'épaisseur 88 interchangeable en vue de permettre les réglages.

La face annulaire 87 se raccorde par sa périphérie extérieure à une face périphérique extérieure 90, cylindrique de révolution autour de l'axe 58 avec un diamètre supérieur à celui de la face 86, face 90 par laquelle le coulisseau 75 est en contact glissant, dans une relation de guidage au coulissement relatif suivant l'axe 58, avec une face périphérique intérieure complémentaire 91 d'une zone du bloc support 63 intermédiaire entre sa partie supérieure portant la platine 64 et sa partie inférieure recevant et guidant le support coulisseau 175 ; dans cette partie intermédiaire, le coulisseau 75 présente une face d'extrémité inférieure 92, annulaire, plane, de révolution autour de l'axe 58 auquel elle est perpendiculaire, et le support coulisseau 175 escamotable élastiquement vers le bas, selon l'axe 58, porte de façon solidaire une bague 79 présentant une face supérieure 93 annulaire, plane, orientée transversalement par rapport à l'axe 58 auquel elle est perpendiculaire, placée en dessous et en regard de la face 92 à une distance de celle-ci, mesurée parallèlement à l'axe 58 lorsque le coulisseau 75 occupe sa position haute dans laquelle sa face d'extrémité supérieure 84 est coplanaire avec la face 65, égale à la distance L1+$\mathcal{E}$ de façon à autoriser l'escamotage du coulisseau 75 vers le bas par rapport à cette position haute sur une telle distance et à servir ensuite de butée vers le bas à cette face 92 du coulisseau 75 ; entre cette face 93 et une face 94, annulaire, plane, de révolution autour de l'axe 58 auquel elle est perpendiculaire, que le coulisseau 75 présente intérieurement, vers le bas, immédiatement en dessous de la face 87, est interposé un ressort à boudin 95 logé dans un espace subsistant entre le coulisseau 75 et le poinçon 74, lequel ressort à boudin 95

20

rappelle élastiquement le coulisseau 75 à sa position haute de coplanéarité des faces 84 et 65, lors d'un tel escamotage.

Un tel escamotage du coulisseau 75 à partir de sa position haute est provoqué par l'intermédiaire de la chemise 2 du véhicule 68 et par l'intermédiaire d'une douille telle que 40 maintenue au-dessus de celle-ci par des moyens qui vont être décrits à présent.

Dans l'exemple de mise en oeuvre illustré, ces moyens comportent sur le bloc de positionnement 69, au-dessus de l'alvéole 70 destiné à recevoir le véhicule 68, un deuxième alvéole 96 apte à recevoir une douille 40 dans une position dans laquelle son axe 42 coïncide avec l'axe 58 et dans laquelle la face 44 de son culot 38 repose vers le bas sur celle 11 des faces d'extrémité annulaires de la chemise 2 qui est tournée vers le haut, notamment lorsque cette face 11 est coplanaire avec celle 6 des faces d'extrémité annulaires du corps 1 qui est également tournée vers le haut, en position haute du coulisseau 75; on notera que, à cet effet, pour permettre l'escamotage ultérieur du coulisseau 75 par mouvement de la douille 40 vers le bas et par l'intermédiaire de la chemise 2, le véhicule 68 est choisi de telle sorte que le diamètre $D_2$ soit au moins égal au diamètre extérieur maximal de la zone de la douille 40 située sur une hauteur L2, mesurée à partir de la face 44 parallèlement à son axe 42 ; de préférence, ces diamètres sont sensiblement égaux, de telle sorte qu'un guidage de la zone de la douille 40 voisine de sa face 44 par la face périphérique intérieure 4 du corps 1, avec coïncidence aussi exacte que possible de l'axe 42 de la douille 40 avec l'axe 3 du corps 1, intervienne dès que la douille 40, repoussant la chemise 2 et le coulisseau 75 vers le bas, pénètre à l'intérieur du corps 1, ce qui assure notamment la coïncidence de l'axe 42 du logement 36 de la douille 40 avec l'axe 8 de la chemise 2, avec lequel se confond comme il a été dit plus haut l'axe 23 de l'amorce 19.

De façon plus générale, notamment dans des domaines autres que l'amorçage, chaque fois qu'il s'agira d'introduire selon l'invention une pièce dans un logement, d'axe déterminé, d'un objet présentant dans sa zone voisine de ce logement une enveloppe extérieure,

de génératrices parallèles à cet axe, déterminée, en utilisant un véhicule du type général décrit ci-dessus, comportant une chemise présentant une face périphérique intérieure définissant un canal de section constante transversalement par rapport à un axe rectiligne et une périphérie extérieure en contact glissant avec la périphérie intérieure d'un corps, pour autoriser une translation relative parallèlement à l'axe, on donnera à la périphérie intérieure du corps une section transversale par rapport à l'axe du canal complémentaire de la section de l'enveloppe extérieure de l'objet dans sa zone voisine du logement, prise transversalement par rapport à l'axe de ce logement, de telle sorte que l'introduction progressive de l'objet à l'intérieur du corps, s'accompagnant de la sortie de la chemise hors de celui-ci, provoque une mise en coïncidence aussi exacte que possible de l'axe du logement et de l'axe du canal, et un positionnement angulaire relatif aussi précis que possible, considéré en référence à ces axes alors confondus ; la périphérie extérieure de la chemise 2 présentera naturellement également dans ce cas une section, prise transversalement par rapport à l'axe du canal, complémentaire de celle de la périphérie intérieure du corps 1 pour maintenir entre eux également un positionnement angulaire relatif précis, en référence à leurs axes respectifs alors confondus.

Dans ce cas, le corps 1 présentera une périphérie extérieure de forme différente d'une forme de révolution autour de l'axe du canal dans un but de détrompage, et il en sera de même des surfaces d'appui complémentaires prévues sur le bloc de positionnement 69 aussi bien pour ce corps que pour l'objet.

Lorsque, par contre, cet objet est de révolution autour d'un axe, comme c'est le cas de la douille 40 illustrée, aucun moyen de détrompage n'est nécessaire et l'alvéole 96 présente, en vue de l'appui de la douille 40 dans le sens d'un rapprochement vis-à-vis de l'axe 54, au moins une, et en pratique deux surfaces d'appui de révolution autour de l'axe 58, avec un développement angulaire au plus égal à 180°, avec dans l'exemple illustré symétrie de chacune des surfaces par rapport au plan 73 ; naturellement, l'alvéole 96 est intégralement situé en retrait vers l'axe 54 par rapport à cette surface ou ces surfaces d'appui.

0119364

22

Dans l'exemple illustré, il est ainsi prévu une surface inférieure d'appui 97 située à un niveau immédiatement supérieur à celui de la surface supérieure d'appui 72 de l'alvéole 70 et reliée à cette surface 72 par une face 98 horizontale, plane, orientée transversalement par rapport à l'axe 58 et située à une distance de la face 65, au-dessus et en regard de celle-ci, sensiblement égale à la hauteur L2 du corps 1 dont la face annulaire d'extrémité 6 tournée vers le haut vient se loger immédiatement en dessous de cette face 98 lorsque l'autre face d'extrémité 7 repose sur la face 65 et que l'axe 3 coïncide avec l'axe 58 ; il est en effet rappelé que le diamètre de la face 97, complémentaire de celui de la douille 40 à proximité immédiate de la face 44 du culot de celle-ci, est inférieur à celui de la face 72 d'un diamètre sensiblement égal au diamètre $D_6$ ; il est par ailleurs prévu une face supérieure d'appui 99 de forme complémentaire de la forme que la douille 40 présente dans une zone 100 voisine de son collet, c'est-à-dire la forme d'une portion de surface de révolution dont la partie inférieure est cylindrique de révolution autour de l'axe 58 avec un diamètre voisin de celui de la face 97, dont la partie supérieure est également cylindrique de révolution autour de l'axe 58 avec un diamètre inférieur , adapté à celui du collet de la douille, et dont la partie intermédiaire présente une forme tronconique de révolution autour de l'axe 58, avec une convergence tournée vers le haut, si bien que la surface d'appui 99, pas plus que la surface d'appui 97, ne constitue un obstacle à un mouvement de la douille 40 vers le bas à partir de sa position dans laquelle la face 44 est coplanaire avec la face 6 du corps 1 du véhicule 68 reposant par sa face 7 sur la face 65 de la platine 64.

Au-dessus de la position ainsi définie pour une douille 40 est disposé, suivant l'axe 58, un poinçon supérieur 101 propre, par un déplacement suivant l'axe 58, à pénétrer à l'intérieur de la douille 40 par le collet de celle-ci pour prendre appui vers le bas, de l'intérieur de la douille, sur le culot de celle-ci et provoquer le mouvement de la douille, de la chemise 2 du véhicule 68, et du coulisseau 75 vers le bas à partir de la position haute correspondant à la coïncidence de la face annulaire 84 du coulisseau 75 avec la face 65 de la platine 64.

A cet effet, le poinçon supérieur 101, présentant par exemple plusieurs tronçons successifs de forme extérieure cylindrique de révolution autour de l'axe 58, est porté par un mandrin 102 lui-même porté par l'extrémité inférieure d'une tige 104 guidée à coulissement suivant l'axe 58, par tout moyen du domaine des connaissances de l'Homme du métier, dans une protubérance radiale 103 du barillet 53, protubérance que la tige 104 traverse de part en part ; à son extrémité supérieure, située au-dessus de la protubérance 103, la tige 104 porte un galet inférieur 105 et un galet supérieur 106, montés à la rotation autour d'axes respectifs 107 et 108 horizontaux, radiaux par rapport à l'axe 54 et coupant l'axe 58 à angle droit, pour prendre appui et rouler respectivement par le bas et par le haut sur les faces inférieure 109 et supérieure 110, parallèles entre elles, d'un chemin de came 111 que l'arbre 62 porte de façon solidaire, c'est-à-dire fixe par rapport au sol, à son extrémité supérieure.

Ce chemin de came 111 se présente sous la forme d'une saillie annulaire continue, gauche par rapport à l'axe 54, que présente la périphérie extérieure 112, quant à elle cylindrique de révolution autour de cet axe, d'un manchon 113 immobilisé sur l'arbre 62.

Les moitiés respectivement gauche et droite de la figure 14 montrent le chemin de came 111 dans sa zone la plus haute et dans sa zone la plus basse, correspondant pour le poste d'amorçage 57 respectivement à l'état illustré à la figure 12 et à l'état illustré à la figure 13, alors que la figure 15 illustre le développement plan de ce chemin de came par le biais du développement dans un plan de la course que son suivi par les galets 105 et 106, dont les axes 107 et 108 sont fixes par rapport à l'arbre 104 et par conséquent par rapport au poinçon supérieur 101, impose à l'extrémité inférieure 114, en forme de disque plan perpendiculaire à l'axe 58 du poinçon 101, et plus précisément à l'intersection de cette face d'extrémité 114 avec l'axe 58.

Ce trajet, illustré en trait mixte et désigné par la référence 116 à la figure 15, doit être considéré comme intégré à cette partie de la description ; en abscisse apparaît la position angulaire de l'axe 58 en référence à l'axe 54, mesurée dans le sens de rotation

24

55 du barillet 53 à partir d'une origine indiquée en Ox à la figure 3, correspondant pour la face 114 du poinçon 101 à l'amorce d'un mouvement de descente à partir d'une position haute extrême ; en ordonnée figurent les niveaux de la face 114, mesurés verticalement en référence à la face supérieure 65 de la platine 64.

Il ressort de la figure 15 que, sur 360° de rotation du barillet 53 autour de son axe 54, à partir de l'origine Ox, le poinçon supérieur 101 se déplace verticalement pendant le parcours, par le poste d'amorçage 57 considéré, d'un angle $\alpha$ de 247,5° compté à partir de l'origine Ox, l'alimentation de l'alvéole 70 et de l'alvéole 96 respectivement en véhicules dontla chemise 2 renferme intérieurement une amorce telle que 19 et est intégralement située à l'intérieur du corps 1 et en douillestellesque 40 s'effectuant au début de ce parcours au moyen d'une roue de transfert 117 alors que l'évacuation des douilles 40 munies d'une amorce 19 et des véhicules vides, dont la chemise est intégralement située à l'intérieur du corps, s'effectuent à la fin de ce parcours grâce à une deuxième roue de transfert 118.

On a fait apparaître pour un certain nombre d'orientations angulaires du poste d'amorçage considéré 57, par rapport à l'origine Ox, les positions correspondantes de la douille 40 et du véhicule 68.

Initialement, lorsque le poste 57 se trouve en Ox, la face 114 du poinçon 101 est située par rapport à la face 65 à un niveau $\underline{h1}$ supérieur à la somme de L1 et de L3, où L3 est la longueur de la douille 40 mesurée parallèlement à son axe 42; pour la douille 40, le véhicule 68 et l'amorce 19 en cours de passage de la roue de transfert 117 aux alvéoles correspondants 70 et 96 du poste d'amorçage 57, ceci correspond à une coïncidence des faces d'extrémité 7 et 12, tournées vers le bas, du corps 1 et de la chemise 2, et de la face de fond 27 de l'amorce 19 avec le niveau de la face 65 sur laquelle elles glissent progressivement suivant une direction radiale par rapport à l'axe 54, et au repos de la douille 40 par sa face 44 sur la face d'extrémité 11 de la chemise 2, alors coplanaire avec la face 6 du corps 1, les axes 8, 3, 23, 42 étant alors confondus ; au fur et à mesure que la rotation se poursuit, les axes confondus viennent en coïncidence avec l'axe 58 et à la roue de transfert 117 se substituent, pour maintenir respectivement le véhicule 68 par son corps 1 et la douille 40 en position contre les surfaces d'appui respectives 71-72 et 97-99 des alvéoles 70 et 96, des faces respectives 119 et 120, de révolution autour de l'axe 54, de gardes de guidage 121, 122 disposées autour du barillet d'amorçage 53 sur un maximum de l'angle $\alpha$ , entre les roues de transfert 117 et 118 ; la face 119 de la garde 121 présente une forme cylindrique de révolution autour de l'axe 54, avec un diamètre égal au diamètre du cylindre primitif 59 augmenté du diamètre $D_6$ de la face périphérique extérieure 5 du corps 1, et la face 120 présente une forme en rapport avec celle de la douille 40 pour servir d'appui centrifuge à celle-ci lors de la rotation du barillet ; si la douille 40 présente dans sa zone la plus proche de la face 44 une enveloppe générale cylindrique de révolution autour de l'axe 42, la face 120 présente elle-même une forme cylindrique de révolution autour de l'axe 54 avec un diamètre égal à la somme du diamètre du cylindre primitif 59 et de celui de cette zone de la douille ; si, par contre, la douille 40 présente à proximité de la face 44 une enveloppe périphérique générale conique de révolution autour de son axe 42, la face 120 présente elle-même une forme tronconique de révolution autour de l'axe 54, avec la même conicité, et des diamètres respectivement supérieur et inférieur aisément déterminables par l'Homme du métier en fonction du diamètre du cylindre primitif 59 et des diamètres correspondants du cône enveloppe de la douille 40 ; la face 114 du poinçon 101 se trouve alors à un niveau intermédiaire entre le niveau h1 et la somme L1 + L3, et le corps 1 repose alors par sa face 7 sur la face supérieure 65 de la platine 64 autour du trou 66 de celle-ci, la chemise 2, sur la face 11 de laquelle la douille 40 repose par sa face 44, repose par sa face 12 sur la face annulaire d'extrémité 84 du coulisseau 75 alors coplanaire avec la face 65, et l'amorce 19 repose par sa face 27 sur la face d'extrémité supérieure 76 du poinçon inférieur 74 ; en d'autres termes, les faces 7, 12, 27 sont au niveau O et la face 44 au niveau L1, égal à L2.

26

Lorsque, ensuite, la rotation du poste 57 dans le sens 55 se poursuit, la face 114 du poinçon supérieur 101 n'ayant cessé de descendre parvient, après 60° en référence à l'origine Ox, à un niveau $h2$ égal à L1 augmenté de L4, où L4 désigne la distance séparant, parallèlement à l'axe 42, la face 44 de la douille 40 et la face 115 de celle-ci, plane et orientée transversalement par rapport à l'axe 42, délimitant le volume intérieur 52 dela douille 40 vers la face 44 de celle-ci ; le véhicule 68, l'amorce 19 et la douille 40 occupent encore la position précédemment décrite.

On notera que, lorsque la face 114 parvient au niveau $h2$, sa vitesse de descente s'annule pratiquement, compte tenu de la rotation du barillet 53 en continu, à vitesse angulaire constante, de telle sorte qu'elle entre sans heurt au contact de la face 115 de la douille 40 ; naturellement, le diamètre extérieur du poinçon supérieur 101 est choisi compatible à la fois avec sa pénétration à l'intérieur de la douille 40 par le collet de celle-ci et avec un appui de la face 114 contre la face 115 autour de l'évent 50.

Le mouvement de descente du poinçon supérieur 101 se poursuit ensuite à une vitesse supérieure jusqu'à ce que les faces 114 et 115 parviennent à un niveau $h3$ sensiblement égal à L4 augmenté de la hauteur hors-tout L5 de l'amorce 19 mesurée parallèlement à l'axe 23 de celle-ci entre ses faces 27 et 30 ; comme il ressort de la figure 15. cette phase de descente s'accompagne d'une pénétration de la douille 40, par ses zones voisines de la face 44, à l'intérieur du corps 1 dont la face périphérique intérieure 4 assure si besoin est une mise en coïncidence précise de l'axe 42 et de l'axe 3 avec lequel se confond l'axe 8 coïncidant lui-même avec l'axe 23 de l'amorce 19, et d'une descente de la chemise 2 suivant les axes 3 et 8 confondus à l'intérieur du corps 1 ; dans ce mouvement, la chemise 2 reste en appui par sa face 12 sur la face supérieure 84 du coulisseau 75, qui s'escamote vers le bas en provoquant la compression du ressort 95 alors que, à moins d'un coincement accidentel dans le canal 17, provoquant l'escamotage du poinçon inférieur 74 grâce au coussin hydraulique 80, par l'intermédiaire du support coulisseau 175, l'amorce 19 reste immobile, en appui par sa face 27 contre la face supérieure 76 du poinçon inférieur 74 ; on notera que cette immobilité de l'amorce, autour de laquelle la chemise 2 descend progressivement, ne constitue pas une simple variante de mise en oeuvre du procédé connu d'extraction d'une pièce hors du canal d'un véhicule par déplacement de la pièce par rapport à ce véhicule maintenu fixe, et présente l'avantage, grâce à un appui fixe pour l'amorce, ou plus généralement la pièce, d'éviter à celle-ci toute vibration et tout désaxement par rapport au canal, sources de coincements.

A la fin de cette étape, les faces 114 et 115 occupant le niveau $h_3$, la face 44 de la douille 40 occupe un niveau L5, c'est-à-dire coïncide avec la face 30 de l'amorce 19, de même que la face 11 de la chemise 2, dont la face 12 se trouve avec la face annulaire 84 du coulisseau 75 à un niveau L5 moins L1 en dessous de la face 65 ; la face 27 de l'amorce 19 et la face 7 du corps 1 restent quant à eux au niveau d'origine.

Le passage du niveau $h_2$ au niveau $h_3$ s'effectue sur 38° de rotation du poste d'amorçage 57 considéré.

Au cours de l'étape suivante, le poinçon supérieur 101 poursuit sa descente, toutefois à vitesse réduite dans la mesure où cette descente s'accompagne de l'introduction, de force, de l'amorce 19 dans son logement 36 de la douille 40 jusqu'à ce que la face 27 soit placée en retrait par rapport à la face 44 de la valeur $\varepsilon$ précédemment définie, correspondant sensiblement à un excès de la profondeur L6 du logement 36, c'est-à-dire de la hauteur de la face 46 mesurée parallèlement à l'axe 42, par rapport à la hauteur hors-tout L5 de l'amorce 19 ; en 30° de rotation du poste d'amorçage 57, ce mouvement amène les faces 114 et 115 à un niveau $h_4$ égal à $L4-\varepsilon$ ce qui correspond pour la face 44 de la douille 40 et pour la face 11 de la chemise 2, à laquelle elle reste accolée, au niveau $-\varepsilon$, c'est-à-dire légèrement en dessous de la face 65 de la platine 64 définissant le niveau zéro de la face 7 du corps 1 accolée à cette face 65, et des faces 27 de l'amorce 19 et 76 du poinçon inférieur en contact intime à ce niveau zéro, alors que la face 12 de la chemise 2 et la face 84 du coulisseau 75, elles aussi en contact intime, se trouvent au niveau $-(L1+\varepsilon)$, en dessous de la face 65.

On notera que, en cas de résistance excessive à la pénétration de l'amorce 19 dans son logement 36 de la douille 40 lors de cette étape, le poinçon inférieur 74 peut s'escamoter vers le bas du fait du coussin hydraulique 80, pour autoriser un escamotage de l'amorce vers le bas en contrepartie de la descente du poinçon supérieur 101.

On notera également que, au cours des deux étapes précitées, la douille 40 se substitue progressivement à la chemise 2 à l'intérieur du corps 1 du véhicule 68, mais que ce n'est que lorsque la face 114 du poinçon 101 franchit un niveau $h_4+\varepsilon$ que la chemise 2 se dégage intégralement du corps 1; en particulier, immédiatement avant l'introduction de l'amorce 19 dans son logement 36 et pendant cette introduction, la douille 40 par son culot 44 et la chemise 2 sont engagées conjointement dans le corps 1, qui les maintient dans un alignement précis et assure l'introduction dans les meilleures conditions possibles.

Le poste d'amorçage 57 conserve cet état sur 10,5° de rotation, puis le poinçon 101 amorce un mouvement de remontée qui, sur 49° de rotation du poste 57, amène sa face inférieure 114 au niveau $h_5$ identique au niveau $h_2$, le ressort 95 provoquant un mouvement de retour du coulisseau 75 vers le haut, en maintenant via la chemise 2 un appui de la face 115 de la douille 40 contre la face 114 du poinçon 101, jusqu'à ce que la face 84 soit à nouveau coplanaire avec la face 65, ce qui ramène la chemise 2 intégralement à l'intérieur du corps 1, avec coplanéarité des faces 12 et 7 et des faces 11 et 6, et ramène également la face 44 de la douille 40 au niveau $L_1$ ; l'amorce 19 immobilisée par friction dans son logement 36 dans une position dans laquelle sa face 27 est en retrait de la valeur $\varepsilon$ par rapport à la face 44 de la douille 40 quitte au cours de ce mouvement la face supérieure 76 du poinçon inférieur 74, et sa face 27 se trouve à la fin de cette étape, au niveau $L_1+\varepsilon$ ; le corps 1 du véhicule reste quant à lui immobilisé à l'encontre d'un mouvement ascendant, par la face 98 délimitant supérieurement l'alvéole 70.

Dans une dernière phase, le poinçon 101 poursuit son mouvement ascendant sur 60° de rotation du poste 57, ce qui le dégage progressivement du volume intérieur 52 de la douille 40 et amène sa face inférieure 114 au niveau initial $h_1$, alors que la douille 40 continue à reposer par sa face inférieure 44 sur la face 11 de la chemise 2 maintenue en coplanéarité avec la face 6 du corps 1 par appui de la face 12 contre la face 84 du coulisseau 75 alors coplanaire avec la face 65 de la platine 64.

Jusqu'au franchissement à nouveau de l'origine Ox, le poinçon 101 conserve une telle position relativement à la face 65 de la platine 64.

Dès que le poinçon supérieur 101 s'est suffisamment dégagé de la douille 40 pour libérer celle-ci dans le sens radial par rapport à l'axe 54, c'est-à-dire en pratique dès que sa face inférieure 114 atteint un niveau égal à L1 + L3 par rapport à la face 65, la douille 40 à présent munie de son amorce 19 et le véhicule 68 ayant retrouvé son état initial de coïncidence des faces 12 et 7 et des faces 11 et 6 peuvent être évacués radialement par la roue de transfert 118 selon un processus inverse de celui de leur introduction radiale par la roue de transfert 117, les gardes de guidage 121 et 122 étant interrompues à cet effet dans les zones dans lesquelles, respectivement, le cylindre primitif 59 du barillet d'amorçage 53 est tangent à un cylindre primitif 123 de la roue de transfert 117, cylindrique de révolution autour d'un axe 124 parallèle à l'axe 54 et autour duquel la roue de transfert 117 est entraînée à la rotation dans un sens 125 inverse du sens 55, et à un cylindre primitif 126 de la roue de transfert 118, cylindrique de révolution autour d'un axe 127 parallèle à l'axe 54 et autour duquel la roue de transfert 118 est entraînée à la rotation dans un sens 128 identique au sens 125 ; les diamètres respectifs des cylindres primitifs 123 et 126 sont égaux à celui du cylindre primitif 59, et les vitesses angulaires de rotation respectives des roues 117 et 118 et du barillet 53 sont identiques.

On notera que les zones dans lesquelles le cylindre primitif 59 du barillet 53 est tangent au cylindre primitif 123 de la roue de transfert 117 et au cylindre primitif 126 de la roue de transfert 118 sont situées à l'intérieur du secteur angulaire α, respectivement à proximité de l'axe Ox et à proximité d'un axe Oy décalé angulairement de la valeur α en référence à l'axe 54 et dans le sens 55, par rapport à l'axe Ox.

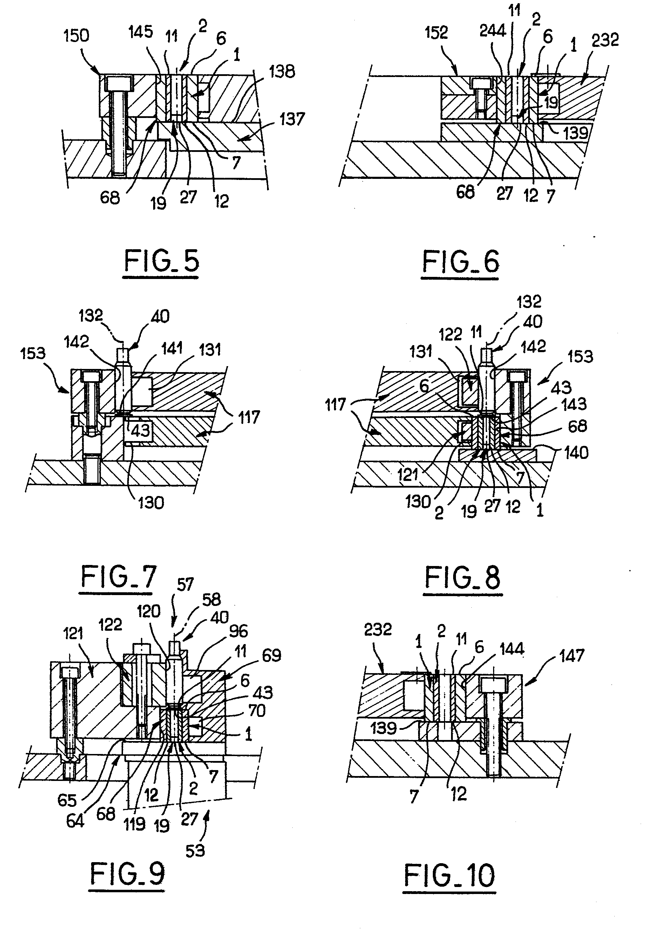

Si l'on se réfère plus particulièrement aux figures 7 et 8, on voit que la roue de transfert 117 présente une périphérie extérieure 129 cylindrique de révolution autour de l'axe 124 avec le même diamètre que son cylindre primitif 123, et dans laquelle sont aménagés des alvéoles respectivement inférieur 130 et supérieur 131, ouverts dans le sens d'un éloignement radial par rapport à l'axe 124, et présentant des surfaces d'appui vers celui-ci respectivement pour un véhicule 68 dont la chemise est intégralement logée à l'intérieur du corps et pour une douille 40, dans une position de ce véhicule et de cette douille telle que leurs axes respectifs soient confondus en un axe 132 situé sur le cylindre primitif 123 ; les paires d'alvéoles coaxiaux 130-131 sont réparties angulairement le long du cylindre primitif 123 de façon régulière, et se retrouvent en même nombre que les postes d'amorçage 57 du barillet 53, c'est-à-dire au nombre de 8 dans l' exemple non limitatif illustré.

Il en est de même pour la roue de transfert 118, dont les axes respectifs des paires d'alvéoles respectivement supérieur et inférieur , propres à recevoir respectivement une douille et un véhicule dont la chemise est intégralement logée à l'intérieur du corps, sont régulièrement réparties angulairement le long du cylindre primitif 126 en un nombre identique à celui des postes d'amorçage 57 du barillet 53.

Les alvéoles supérieurs respectifs tels que 131 des roues de transfert 117 et 118 sont ainsi aptes respectivement à alimenter les alvéoles supérieurs 96 du barillet 53 en douilles 40 appelées à recevoir une amorce en provenance d'un barillet opératoire 230, et à effectuer la reprise dans les alvéoles 96 des douilles ayant reçu une amorce, pour les transférer à un autre barillet opératoire 231.

Ils assurent également respectivement la superposition coaxiale d'une douille 40 à amorcer et d'un véhicule 68 dont la chemise 2 est intégralement logée à l'intérieur du corps 1 et porte intérieurement une amorce 19, et la séparation de la douille 40 amorcée par rapport au véhicule 68 vidé de son amorce, en coopérant avec une troisième roue de transfert 232 dont deux détails sont illustrés aux figures 6 et 10, et qui présente un cylindre primitif 233 d'axe 234 parallèle aux axes 124 et 127, avec un sens de rotation 235 autour de cet axe identique au sens 55 ; le cylindre primitif 233 présente un diamètre identique à celui du cylindre primitif 123 et 126 auxquels il est tangent, et le long de ce cylindre primitif sont régulièrement répartis des alvéoles 236 aptes à coopérer respectivement avec les alvéoles inférieurs 130 de la roue de transfert 117 et avec les alvéoles inférieurs de la roue de transfert 118 pour respectivement, alimenter la roue de transfert 117 et décharger la roue 118 ; le nombre d'alvéoles 236 est identique à celui des postes d'amorçage 57 du barillet 53, et la vitesse angulaire de rotation de la roue de transfert 232 identique à celle de celui-ci.

La roue de transfert 232 est elle-même alimentée dans les mêmes conditions par une roue de transfert 133 et déchargée par une roue de transfert 134, cette dernière alimentant un barillet 135 d'alimentation des véhicules en amorce, conformément aux enseignements du brevet français n° 82 00801 du 20 Janvier 1982, lequel alimente une roue de transfert 136 qui elle-même alimente un barillet de contrôle 137 jouant le rôle d'une roue de transfert de la roue 136 à la roue 133.

On se référera au brevet précité en ce qui concerne le barillet 135 ; les roues de transfert 232, 133, 134, 136 et le barillet 137 considéré comme une roue de transfert ressortent quant à eux d'une technique connue de l'Homme du métier.

On rappellera simplement que les roues de transfert 232, 133, 134, 136 et les barillets 135 et 137, en se référant à la figure 5 en ce qui concerne ce dernier, transportent dans des alvéoles ouverts suivant une direction radiale centrifuge des véhicules 68 dont la chemise 2 est intégralement logée à l'intérieur du corps 1 en assurant la coplanéarité des faces 7 et 12 avec la face supérieure 65 de la platine 64 de chaque poste d'amorçage 57, par appui vers le bas contre une face plane coplanaire avec cette face 65, désignée par la référence 138 et rotative en ce qui concerne le barillet 137 (figure 5) et désignée par la référence 139 et fixe en ce qui concerne la roue de transfert 232 ( figures 6 et 10) ; pour remplir également un tel rôle lors du transfert des véhicules entre la roue 232 et le barillet 53, les roues de transfert 117 et 118 sont également pourvues de telles faces d'appui vers le bas, planes et coplanaires avec la face 65 et l'on a désigné par la référence 140, à la figure 8, la face fixe jouant ce rôle dans la roue de transfert 117.

Lors du parcours successif par les véhicules de la roue 136, du barillet 137, des roues 133, 232, 117, ces faces d'appui du véhicule

0119364

32

vers le bas servent également à maintenir l'amorce 19 dans le canal 17 de la chemise 2, en fournissant à sa face 27 un appui vers le bas.

Les douilles 40 sont quant à elles retenues à l'encontre d'un mouvement vers le bas, jusqu'à ce que le contact s'établissant entre les cylindres primitifs respectifs 123 et 233 des roues de transfert 117 et 232 les amènent à reposer vers le bas sur des véhicules 68 (figures 8 et 9) et après qu'elles aient cessé de reposer sur de tels véhicules par rupture du contact entre les cylindres primitifs 126 et 233 des roues de transfert 118 et 232, par des faces planes, situées à un niveau L1 ou L2 au-dessus de la face 65 parallèlement à celles-ci, la face jouant ce rôle dans le cas de la roue de transfert 117 ayant été désignée par la référence 141 à la figure 7.

En outre, de façon connue en soi, des gardes de guidage fixes présentant vers les axes respectifs des barillets et des roues de transfert des faces d'appui respectivement pour les douilles (face 142 en ce qui concerne la roue de transfert 117) et les véhicules (face 143 en ce qui concerne la roue de transfert 117, 144 et 244 en ce qui concerne la roue de transfert 232, 145 en ce qui concerne le barillet 137) empêchent les douilles et véhicules de quitter par un mouvement centrifuge les alvéoles respectifs en dehors des zones de transfert entre roues, ou entre roues et barillets ; ces gardes de guidage ont été désignées par les références 146 à 153 en ce qui concerne respectivement la roue de transfert 118, le tronçon de roue de transfert 232 joignant la roue 118 à la roue de transfert 134, cette roue de transfert 134, le barillet 135, la roue de transfert 136, le barillet 137, la roue de transfert 133, la partie de la roue de transfert 232 joignant la roue 133 à la roue de transfert 117, et cette roue de transfert 117.

On définit ainsi les chemins de circulation désignés respectivement par les références 154 et 155 à la figure 4, pour les véhicules et pour les douilles, avec un trajet conjoint de l'entrée en contact des cylindres primitifs respectifs 233 et 123 des roues de transfert 232 et 117 à l'entrée en contact des roues de transfert 118 et 232 (compte tenu de leur sens de rotation respectif).

33

Naturellement, d'autres chemins de circulation, correspondant à des conceptions différentes des barillets, des roues de transfert et des gardes de guidage, pourraient être choisis par l'Homme du Métier sans que l'on sorte pour autant du cadre de la présente invention.

On notera que l'utilisation, pour traiter des calibres de munition différents, de véhicules dont les corps respectifs présentent des cotes extérieures L2 et D6 identiques permet d'éviter un changement des gardes de guidage et un réglage de niveau relatif des alvéoles superposées sur les roues de transfert 117 et 118 et sur les postes d'amorçage 57 du barillet 53 lors des changements de calibre.

Dans chaque cas, l'utilisation d'un véhicule double servant de surface d'appui à la douille permet une entrée et une sortie du barillet d'amorçage sans risques, ainsi qu'une réunion et une séparation des chemins de circulation respectifs 154 et 155 des véhicules et des douilles en continu, de façon naturelle et rapide, sans recours à des systèmes d'aiguillages compliqués mais par le simple jeu de gardes de guidage judicieusement disposées respectivement de part et d'autre de ces chemins de circulation, comme il est connu de l'Homme du Métier ; on notera que selon une autre variante, non illustrée, de mise en oeuvre de l'invention, les corps respectifs des véhicules peuvent être articulés deux à deux autour d'axes parallèles entre eux, généralement parallèles à une orientation privilégiée que l'on désire donner aux axes respectifs des canaux internes des chemises de ces véhicules, pour former une chaîne de véhicules permettant de se dispenser notamment des gardes de guidage en conservant tous les avantages de la conception de véhicules selon l'invention.

Lors de l'amorçage, le véhicule double autorise un centrage simple et reproductible de la douille et de l'amorce, permettant de respecter une cadence rapide dans l'amorçage, en dépit de l'ajustement serré qu'implique cet amorçage.

Ceci est facilité du fait que, lors de l'amorçage, l'élément instable et dangereux que constitue l'amorce reste fixe, alors que seul se déplace l'élément le plus stable, qui est en outre inoffensif, c'est-à-dire la douille ; en fait, l'amorçage n'implique aucun mouvement dans la partie inférieure du barillet 53, autre que le mouvement éventuel du système hydraulique de sécurité 80.

De façon générale, ces avantages se retrouveront chaque fois que l'on utilisera un véhicule conforme à la présente invention, notamment dans le cadre d'un procédé analogue à celui qui a été décrit ci-dessus, pour introduire toute pièce autre qu'une amorce dans un logement complémentaire prévu à cet effet dans un objet autre qu'une douille, et l'on ne sortira pas du cadre de la présente invention en apportant au véhicule, au procédé et au dispositif qui ont été décrits les modifications liées à l'adaptation à de tels pièces et objets différents.

35

## REVENDICATIONS

1. Véhicule destiné à recevoir une pièce, pour faciliter la manutention de celle-ci, et à la restituer ensuite, du type comportant à cet effet un canal (17) présentant un axe rectiligne (3, 8) et une section constante transversalement à cet axe (3, 8) pour recevoir intérieurement ladite pièce, caractérisé en ce qu'il comporte au moins une chemise (2) délimitant le canal (17) et un corps (1) extérieur à ce canal (17) et par rapport auquel la chemise (2) est montée avec possibilité de translation relative parallèlement à l'axe (3, 8), de façon à coopérer avec des moyens (101, 64, 74, 75) de transfert de la pièce (19) hors du canal (17) en étant dissociable de ces moyens (101, 64, 74, 75).

2. Véhicule selon la revendication 1, caractérisé en ce que la chemise (2) et le corps (1) sont délimités, transversalement par rapport à l'axe (3, 8), par deux faces respectives d'extrémité (11, 12, 6, 7) perpendiculaires à l'axe (3, 8) et en ce que les longueurs respectives (L2, L1) du corps (1) et de la chemise (2) mesurées entre leurs deux faces d'extrémité respectives (11, 12, 6, 7) parallèlement à l'axe (3, 8) sont égales, de telle sorte que, lors de ladite translation, la chemise (2) et le corps (1) puissent être amenés dans un état privilégié dans lequel leurs faces d'extrémité respectives (11, 12, 6, 7) sont coplanaires deux à deux.

3. Véhicule selon l'une quelconque des revendications 1 et 2, caractérisé en ce que la chemise (2) est tubulaire et présente une face périphérique intérieure (9) délimitant le canal (17) et une face périphérique extérieure (10) de section constante transversalement à l'axe (3, 8), et en ce que le corps (1) présente une face périphérique intérieure (4) de section constante transversalement à l'axe (3, 8) et complémentaire de celle de cette face périphérique extérieure (10) pour assurer par contact mutuel glissant ladite possibilité de translation relative, à partir d'un état privilégié dans lequel la chemise (2) est engagée au maximum dans le corps (1).

4. Véhicule selon la revendication 3, caractérisé en ce que les faces périphériques intérieure (9) et extérieure (10) de la chemise (2) sont cylindriques de révolution autour de l'axe (3, 8), ainsi que la face périphérique intérieure (4) du corps (1).

5. Véhicule selon la revendication 4, caractérisé en ce que le corps (1) est tubulaire et présente une face périphérique extérieure (5) cylindrique de révolution autour de l'axe (3, 8).

6. Véhicule selon l'une quelconque des revendications 4 et 5, caractérisé en ce que la face périphérique intérieure (4) du corps (1) et/ou la face périphérique extérieure (10) de la chemise (2) présentent une rayure hélicoïdale (28).

7. Véhicule selon l'une quelconque des revendications 3 à 6, caractérisé en ce que la face périphérique intérieure (4) du corps (1) et/ou la face périphérique extérieure (10) de la chemise (2) présentent au moins une extrémité chanfreinée (13, 14, 15, 16), transversalement par rapport à l'axe (3, 8).

8. Procédé d'introduction d'une pièce (19) dans un logement (36) d'un objet (40) au moyen d'un véhicule (68) selon l'une quelconque des revendications 3 à 7, le logement (36) présentant un axe déterminé (42) et l'objet (40) présentant, dans sa zone voisine du logement (36), une enveloppe extérieure de génératrices parallèles à cet axe (42) déterminé , ledit procédé comportant les étapes consistant à :

a) introduire et retenir le pièce (19) dans le canal (17) du véhicule (68),

b) acheminer le véhicule (68) et la pièce (19) jusqu'à des moyens (101, 64, 74, 75) de transfert de cette dernière hors du canal (17),

c) transférer la pièce (19) hors du canal (17),

d) séparer le véhicule (68) des moyens de transfert (101, 64, 74, 75),

caractérisé en ce que l'on choisit un véhicule (68) dont le corps (1) présente une face périphérique intérieure (4) dont la section transversalement à l'axe (3, 8) est complémentaire de ladite enveloppe de l'objet (40) et, après l'étape a) et avant l'étape c), on accole le véhicule (68) et l'objet (40) par la chemise (2) du véhicule (68) dans ledit état privilégié, dans une position relative dans laquelle les axes respectifs (3, 8, 42) du logement (36) et du canal (17) coïncident et dans laquelle le logement (36) fait face au canal (17), et en ce , au cours de l'étape c), l'on transfère la pièce (19) du canal (17) au logement (36) par translation relative de la pièce (19) et du canal (17) suivant l'axe (3, 8) de celui-ci, d'une part en provoquant une translation du corps (1) par rapport à la chemise (2) restant quant à elle accolée à l'objet (40), pour envelopper celui-ci au moyen du corps (1) en laissant celui-ci également engagé sur la chemise (2) (opération a), et d'autre part en poussant la pièce (19) jusque dans le logement (36) (opération b), et en ce que l'on provoque le retour du véhicule (68) audit état privilégié avant de le séparer de l'objet (40).

9. Procédé selon la revendication 8, caractérisé en ce que, dans ladite position relative, les axes respectifs (5, 8, 42) du logement (36) et du canal (17) sont verticaux, et le véhicule (68) est disposé sous l'objet (40) qui repose sur la chemise (2) du véhicule.

10. Procédé selon l'une quelconque des revendications 8 et 9, caractérisé en ce que l'on retient la pièce (19) dans le canal (17) du véhicule (68) à proximité de l'une (7, 12) des extrémités de celui-ci, et en ce que l'on accole la chemise (2) et l'objet (40) à proximité de l'autre extrémité (6, 11) du canal (17).

11. Procédé selon la revendication 10, caractérisé en ce que l'on pratique simultanément les opérations a et b, notamment en utilisant un véhicule (68) selon la revendication 2.

12. Procédé selon la revendication 11, caractérisé en ce que l'on pratique les opérations a et b en retenant le corps (1) du

38

véhicule (68) et la pièce (19) à l'encontre d'un mouvement notamment suivant l'axe (3, 8) du canal (17) et en chassant la chemise (2) par rapport au corps (1) et à la pièce (19) suivant cet axe (3, 8) par une poussée appliquée par l'intermédiaire de l'objet (40) que l'on introduit dans le corps (1) ainsi retenu par une translation relative suivant cet axe (3, 8) jusqu'à ce que le logement (36) reçoive la pièce (19).

13. Dispositif pour la mise en oeuvre du procédé selon l'une quelconque des revendications 8 à 12, caractérisé en ce qu'il comporte, sur un poste de travail (57), des moyens (64, 69, 74, 75) pour recevoir dans ladite position relative un objet (40) et un véhicule (68) selon l'une quelconque des revendications 3 à 7 dans ledit état privilégié, dans le canal (17) duquel une pièce (19) est retenue, et des moyens (101, 64, 74, 75) pour effectuer le transfert de la pièce (19) du canal (17) au logement (36) par translation de la pièce (19) dans le canal (17) suivant l'axe (3, 8) de celui-ci, et en ce que les moyens (101, 64, 74, 75) pour effectuer le transfert comportent des moyens (101, 64, 74, 75) pour appliquer des poussées antagonistes suivant l'axe (3, 8) du canal (17) d'une part à l'objet (40) et à la chemise (2) et d'autre part au corps (1) et à la pièce (19), dans le sens d'une introduction de l'objet (40) dans le corps (1) et de la pièce (19) dans le logement (36) de l'objet (40) à partir dudit état privilégié, et pour ramener ensuite le véhicule (68) audit état privilégié.

14. Dispositif selon la revendication 13, pour la mise en oeuvre du procédé selon la revendication 12, caractérisé en ce que les moyens (101, 64, 74, 75) pour effectuer le transfert comportent des moyens (64, 74) pour retenir le corps (1) du véhicule (68) et la pièce (19) à l'encontre d'un mouvement notamment suivant l'axe (3, 8) du canal (17), et des moyens (101, 75) pour déplacer l'objet (40) et la chemise (2) dans ledit sens et en sens inverse.

39

15. Dispositif selon la revendication 14, destiné à l'utilisation d'un véhicule (68) selon la revendication 2 en combinaison avec l'une quelconque des revendications 3 à 7, caractérisé en ce qu'il comporte audit poste (57) :

- un alvéole (70) présentant au moins des faces horizontales respectivement supérieure tournée vers le bas (98) et inférieure tournée vers le haut (65), complémentaires d'au moins une partie des faces d'extrémité (6, 7) d'un corps (1) de véhicule (68), et une face périphérique intérieure (71, 72) d'axe vertical (58), complémentaire d'au moins une partie d'une face périphérique extérieure (5) de ce corps (1) pour recevoir et immobiliser un tel corps (1) dans une position dans laquelle l'axe (3, 8) du canal (17) coïncide avec ledit axe vertical (58) notamment à l'encontre d'un mouvement vertical,

- un poinçon inférieur (74) fixe par rapport à l'alvéole (70), et présentant une face d'extrémité supérieure horizontale (76) de niveau avec la face inférieure (65) de l'alvéole (70) pour servir d'appui vers le bas à la pièce (19), et une face périphérique extérieure (83) adjacente à cette face d'extrémité supérieure (76) et présentant transversalement à l'axe vertical (58) une section constante et identique de celle de la face périphérique intérieure (9) de la chemise (2),

- un coulisseau (75) présentant une face supérieure horizontale (84) annulaire, complémentaire d'une face d'extrémité (12) de la chemise (2) pour servir d'appui vers le bas à celle-ci, le coulisseau (75) étant monté à coulissement vertical autour de la face périphérique extérieure (83) du poinçon inférieur (74) entre une position haute dans laquelle sa face supérieure (84) est coplanaire de la face inférieure (65) de l'alvéole (70) et une position basse dans laquelle sa face supérieure (84) est située au-dessous de cette face inférieure (65) d'une distance égale à la longueur (L1) de la chemise (2), et

40

des moyens (95) pour rappeler élastiquement le coulisseau (75) de la position basse à la position haute,

— des moyens (96) pour recevoir un objet (40) dans une position dans laquelle il repose par une face inférieure (44) entourant le logement (96) sur la face supérieure (84) du coulisseau (75) par l'intermédiaire de la chemise (2), et présente l'axe (42) de son logement (36) selon ledit axe vertical (58) et ladite enveloppe dans le prolongement vertical direct de la face périphérique extérieure (10) de la chemise (2), et un organe supérieur de poussée (101) disposé selon ledit axe vertical (58) au-dessus du poinçon inférieur (74) et mobile verticalement par rapport à celui-ci, pour animer l'objet (40) d'un mouvement vertical d'une position haute dans laquelle sa face inférieure (44) est coplanaire avec la face supérieure (98) de l'alvéole (70) à une position basse dans laquelle sa face inférieure (44) est approximativement coplanaire avec la face inférieure (65) de l'alvéole (70), notamment en dessous de cette dernière face (65), et autoriser un mouvement en retour de la position basse à la position haute.

16. Dispositif selon la revendication 15, caractérisé en ce qu'il comporte plusieurs desdits postes de travail (57), répartis à la périphérie d'un barillet opératoire (53) tournant autour d'un axe vertical (54), alimenté et desservi en véhicules (68) et objets (40) selon une cinématique continue.

17. Dispositif selon la revendication 16, caractérisé en ce que ledit mouvement vertical de l'organe supérieur de poussée (101) de chaque poste (57) est commandé par des galets (105, 106) évoluant le long d'un chemin de came (111) au fur et à mesure de la rotation du barillet (53).

1 / 7

FIG.1

FIG.2

FIG.3

FIG_4

FIG_5

FIG_6

FIG_7

FIG_8

FIG_9

FIG_10

FIG. 11

FIG. 13

FIG. 12

0119364

FIG. 14

FIG. 15

FIG_16

FIG_18

FIG_17

FIG_19

0119364

Office européen
des brevets

**RAPPORT DE RECHERCHE EUROPEENNE**

Numéro de la demande

EP 83 40 2518

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| X,D | US-A-2 829 554 (SAWYER) <br> * Figures; colonne 3, lignes 23-52; colonne 4, lignes 9-44 * | 1,3,4 | B 23 P 19/02 <br> F 42 B 33/04 |
| Y | | 8,13 | |
| | --- | | |
| Y,D | US-A-3 204 518 (JACKSON) <br> * Figures 4,5; colonne 4, lignes 51-75; colonne 5, lignes 1-22 * | 8,13 | |
| | --- | | |
| A | CH-A- 483 299 (LACHAT) | | |
| | --- | | |
| A | US-A-2 878 556 (ROTT et al.) | | |
| | --- | | DOMAINES TECHNIQUES RECHERCHES (Int. Cl. ³) |
| A | US-A-3 184 836 (MILLER) | | |
| | --- | | F 42 B <br> B 23 P <br> B 67 B |
| A | FR-A-2 412 500 (LARRIEU-BEDIN) | | |
| | ----- | | |

Le présent rapport de recherche a été établi pour toutes les revendications

| Lieu de la recherche <br> LA HAYE | Date d'achèvement de la recherche <br> 02-04-1984 | Examinateur <br> FISCHER G.H. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03 82